# FASCICULE DE BREVET EUROPEEN

(11) **EP 3 101 814 B1**
(45) Date de publication et mention de la délivrance du brevet: **30.11.2022**
(21) Numéro de dépôt: 15190533.8
(22) Date de dépôt: 20.10.2015
(51) Int. Cl.: H04B 3/54

(54) **PROCÉDÉ ET DISPOSITIF DE TRANSMISSION D'INFORMATIONS SUR UN CANAL DE COMMUNICATION À IMPÉDANCE VARIABLE, EN PARTICULIER POUR UN SIGNAL VÉHICULÉ PAR COURANT PORTEUR EN LIGNE**
VERFAHREN UND VORRICHTUNG ZUR INFORMATIONSÜBERTRAGUNG ÜBER EINEN KOMMUNIKATIONSKANAL MIT VARIABLER IMPEDANZ, INSBESONDERE FÜR EIN FAHRZEUGSIGNAL ÜBER ONLINE-ÜBERTRAGUNG DURCH TRÄGERSTROM
METHOD AND DEVICE FOR TRANSMITTING INFORMATION ON A COMMUNICATION MEDIUM HAVING A VARIABLE IMPEDANCE, IN PARTICULAR FOR PLC TRANSMISSION

(30) Priorité: 04.06.2015 FR 1555084
(43) Date de publication de la demande: 07.12.2016
(73) Titulaire: STMicroelectronics (Rousset) SAS, 13790 Rousset (FR)
(72) Inventeur: WALLIS, Mark, 06370 Mouans-Sartoux (FR)
(74) Mandataire: Casalonga

(56) Documents cités:
- US-A1- 2008 043 992
- US-A1- 2014 307 812

## Description

Des modes de mise en œuvre et de réalisation de l'invention concernent la transmission d'informations sur un canal de communication, et notamment lorsque ce canal est une ligne électrique, la transmission d'informations par courant porteur en ligne (PLC : Power Line Communications), et plus particulièrement l'amélioration du traitement d'un tel signal en émission lorsque l'impédance du canal de transmission vue par l'émetteur, chute.

Des modes de mise en œuvre et de réalisation de l'invention sont compatibles avec les différentes normes régissant la communication par courant porteur en ligne, notamment mais non exclusivement les normes PLC-G3, PRIME (PoweRline Intelligent Metering Evolution) ou encore la norme IEEE 1901-2.

La technologie de courant porteur en ligne vise à transmettre des données numériques en exploitant l'infrastructure existante du réseau électrique. Elle permet notamment le relevé à distance de compteurs électriques, les échanges entre véhicules électriques et les bornes de recharge ou encore la gestion et le contrôle des réseaux d'énergie (smart grid)

La technologie de courant porteur en ligne (PLC) incorpore notamment la communication par courant porteur en ligne bande étroite (Narrow band Power line Communication : N-PLC) qui est généralement définie comme une communication sur une ligne électrique opérant à des fréquences de transmission jusqu'à 500 KHz.

La communication N-PLC utilise ainsi généralement les bandes de fréquences définies notamment par le comité européen de normalisation électrotechnique (CENELEC) ou par la Commission Fédérale des Communications (FCC).

Ainsi si l'on considère la bande de fréquences CENELEC A (3-95 kHz), les fréquences de transmission se situent entre 42 et 89 KHz dans la norme PRIME tandis qu'elles se situent entre 35 et 91 KHz pour la norme PLC-G3.

Les signaux utilisés dans les communications PLC sont des signaux modulés selon une modulation multi-porteuses, par exemple une modulation en quadrature sur des porteuses orthogonales (modulation OFDM : « Orthogonal Frequency Division Multiplexing », selon une dénomination anglosaxonne couramment utilisée par l'homme du métier), mais utilisant seulement un sous-ensemble de porteuses parmi un ensemble plus grand de porteuses disponibles.

Ainsi par exemple si l'on considère la bande de fréquences CENELEC A, la taille de la transformée de Fourier inverse et de la transformée de Fourier directe est égale à 512, tandis que seules 97 sous-porteuses (les sous-porteuses 86 à 182) sont utilisées pour la transmission dans la norme PRIME.

Si l'on considère la bande de fréquences CENELEC A, la taille de la transformée de Fourier inverse et de la transformée de Fourier directe est égale à 256 alors que seules 36 sous-porteuses (les sous-porteuses 23 à 58) sont utilisées dans la norme PLC-G3.

Les signaux utilisés dans les communications PLC et modulés selon la modulation OFDM présentent un facteur de crête (« crest factor ») supérieur à un et en général élevé. Le facteur de crête d'un signal, couramment appelé PAPR (Peak-to-Average Power Ratio), est une mesure caractéristique de ce signal. C'est le rapport entre la valeur absolue de l'amplitude maximale des pics du signal et la valeur efficace du signal. Il est égal à un pour un signal constant et supérieur à un dès que le signal présente des pics.

Dans les communications PLC, l'impédance du canal de communication (la ligne électrique) vue par l'émetteur peut varier au cours de la communication et peut en pratique chuter lorsqu'un utilisateur branche n'importe quel dispositif comme par exemple un sèche-cheveux ou une machine à laver.

Typiquement une impédance résistive de 2 ohms vue par l'émetteur sert de référence pour déterminer la puissance maximale de sortie de l'émetteur.

Or en fonction du nombre de dispositifs branchés sur la ligne électrique, cette impédance vue de l'émetteur peut être inférieure à 2 ohms voire très faible.

Et lorsque l'émetteur transmet un signal dans une ligne ayant une impédance inférieure à 2 ohms, l'amplificateur de puissance de l'émetteur va entrer en saturation en terme de courant. L'amplificateur entre alors dans un mode de limitation de courant dans lequel il écrête les pics de courants dépassant le courant maximal autorisé. Il en résulte alors une distorsion du signal et une génération d'harmoniques de bruit (« harmonic interferers »).

Comme les fréquences de transmission du signal se situent entre 42 et 89 KHz dans la norme PRIME et entre 35 et 91 KHz pour la norme PLC-G3, les deuxièmes harmoniques se situent entre 70 KHz et 180 KHz.

En conséquence une partie de ces harmoniques interfèrent avec la partie supérieure de la bande fréquentielle utile du signal. En outre ces harmoniques provoquent des interférences en dehors de la bande utile du signal ce qui peut perturber d'autres équipements.

Par ailleurs lorsque l'émetteur doit satisfaire aux exigences de la norme EN50065-1, ce qui est le cas pour des transmissions selon les normes PRIME et PLC-G3, le niveau du signal de sortie de l'émetteur, est mesuré avec un détecteur de pics sur une bande passante de 200 Hz et aucune partie du spectre du signal émis ne doit dépasser 120 dBµV.

US 2008/043992 est un exemple d'art antérieur..

Selon un mode de mise en œuvre et de réalisation, il est proposé de prendre en compte une chute éventuelle d'impédance tout en limitant la distorsion du signal transmis à un niveau acceptable compte tenu de l'application envisagée.

Selon un mode de mise en œuvre et de réalisation il a été observé qu'il existe une corrélation entre le taux d'écrêtage du signal et le niveau de distorsion qui en résulte et il est ainsi proposé de mesurer le taux d'écrêtage du signal et d'ajuster le niveau de signal en fonction de la valeur de ce taux d'écrêtage.

Selon un aspect il est proposé un procédé de transmission d'informations sur un canal de communication, comprenant une conversion numérique/analogique d'un signal numérique modulé par lesdites informations de façon à obtenir un signal analogique initial modulé ayant un facteur de crête supérieur à un, une amplification du signal analogique initial de façon à obtenir un signal modulé amplifié et une transmission sur ledit canal de communication d'un signal analogique de canal modulé issu du signal analogique amplifié modulé.

Selon cet aspect, lorsque l'impédance du canal de communication est susceptible de varier au cours de ladite transmission, le signal amplifié est écrêté lorsque ladite impédance est inférieure à une valeur limite, par exemple 2 ohms vue de l'émetteur ; le procédé comprend alors en outre au moins une détermination au cours de ladite transmission d'un taux d'écrêtage du signal amplifié sur au moins un intervalle temporel et un ajustement du niveau du signal analogique initial en fonction dudit taux d'écrêtage déterminé.

L'ajustement du niveau du signal analogique initial s'entend comme comprenant un ajustement de signal effectué directement en analogique sur le signal analogique initial ou bien indirectement sur le signal analogique initial en agissant par exemple en numérique directement ou indirectement sur le niveau du signal numérique modulé en amont de la conversion numérique/analogique.

Ainsi en réduisant le niveau du signal à l'entrée de l'amplificateur, le taux d'écrêtage peut être réduit par conséquent les interférences causées par la distorsion puisque celle-ci est également réduite.

Le taux d'écrêtage est par exemple le nombre de pics écrêtés du signal au cours dudit intervalle temporel divisé par la longueur de l'intervalle temporel.

Selon un mode de mise en œuvre l'ajustement du niveau du signal analogique initial comprend une comparaison du taux d'écrêtage déterminé avec un seuil et un abaissement du niveau du signal analogique initial si le taux d'écrêtage est supérieur au seuil.

L'homme du métier saura choisir la valeur de ce seuil en fonction du niveau de distorsion acceptable dans l'application envisagée.

La diminution du niveau du signal réduit de rapport signal sur bruit. En conséquence les conditions de fonctionnement optimales sont obtenues lorsque le niveau d'interférence due à la distorsion est sensiblement égal au bruit. L'homme du métier saura déterminer la valeur dudit seuil pour s'approcher voire atteindre ces conditions de fonctionnement optimales. Cela étant, à titre d'exemple non limitatif, pour des transmissions selon les normes PRIME et PLC-G3, un seuil égal à 0,1% du nombre total de pics de l'intervalle temporel est considéré comme conduisant à un niveau acceptable de distorsion même dans des conditions de faible bruit.

Généralement, il est avantageusement prévu plusieurs déterminations successives du taux d'écrêtage au cours d'intervalles temporels successifs, par exemple lorsque les informations sont transmises au cours de trames successives. Dans ce cas, on effectue au cours de l'intervalle temporel courant, une détermination de l'ajustement du niveau du signal analogique initial à appliquer sur le signal analogique initial au cours de l'intervalle temporel suivant.

Selon un mode de mise en œuvre, au début de ladite transmission le signal analogique initial a un niveau nominal, et si lors d'un intervalle temporel courant pour lequel le niveau du signal analogique initial est inférieur au niveau nominal, le taux d'écrêtage déterminé est inférieur audit seuil, l'ajustement du niveau du signal analogique initial à appliquer au cours de l'intervalle temporel suivant comprend une augmentation du niveau du signal analogique initial sans toutefois dépasser le niveau nominal.

Lorsque les informations sont transmises par trame chaque intervalle temporel est par exemple la durée d'une trame.

Les signaux modulés peuvent être modulés selon une modulation OFDM.

Dans des applications du type PLC, le canal de transmission est une ligne électrique et le signal analogique de canal est un signal véhiculé par courant porteur en ligne.

Selon un autre aspect il est proposé un dispositif de transmission d'informations, comprenant une entrée pour recevoir un signal numérique modulé par lesdites informations, une sortie destinée à être couplée sur un canal de communication pour délivrer un signal analogique de canal modulé et des moyens de traitement connectés entre l'entrée et la sortie, configurés pour élaborer le signal analogique de canal modulé à partir du dudit signal numérique modulé.

Les moyens de traitement comportent un étage de conversion numérique/analogique configuré pour effectuer une conversion numérique/analogique du signal numérique modulé et délivrer un signal analogique initial modulé ayant un facteur de crête supérieur à un et un étage amplificateur configuré pour effectuer une amplification du signal analogique initial et délivrer un signal modulé amplifié.

Selon cet autre aspect, l'impédance du canal de communication étant susceptible de varier au cours de ladite transmission et l'étage amplificateur étant configuré pour écrêter le signal amplifié lorsque ladite impédance est inférieure à une valeur limite, les moyens de traitement comprennent en outre un module de contrôle configuré pour effectuer au moins une détermination au cours de ladite transmission d'un taux d'écrêtage du signal amplifié sur au moins un intervalle temporel et un ajustement du niveau du signal analogique initial en fonction dudit taux d'écrêtage déterminé.

Comme indiqué ci-avant, l'ajustement du niveau du signal analogique initial peut être direct ou indirect. Ainsi le module de contrôle peut être configuré pour ajuster directement le niveau du signal analogique initial ou bien indirectement en ajustant par exemple le niveau du signal numérique modulé.

Selon un mode de réalisation le module de contrôle comprend un comparateur configuré pour effectuer une comparaison du taux d'écrêtage déterminé avec un seuil et un moyen d'ajustement configuré pour abaisser le niveau du signal analogique initial si le taux d'écrêtage est supérieur au seuil.

Selon un mode de réalisation le module de contrôle est configuré pour effectuer plusieurs déterminations successives du taux d'écrêtage au cours d'intervalles temporels successifs, et pour effectuer lors d'un intervalle temporel courant, une détermination de l'ajustement du niveau du signal analogique initial à appliquer sur le signal analogique initial au cours de l'intervalle temporel suivant.

Selon un mode de réalisation, au début de ladite transmission le signal analogique initial a un niveau nominal, et si lors d'un intervalle temporel courant pour lequel le niveau du signal analogique initial est inférieur au niveau nominal, le taux d'écrêtage déterminé est inférieur audit seuil, le moyen d'ajustement est configuré pour, au cours de l'intervalle temporel suivant, augmenter le niveau du signal analogique initial sans toutefois dépasser le niveau nominal.

Selon un mode de réalisation l'étage de conversion numérique/analogique est un étage à gain variable et le moyen d'ajustement est configuré pour réduire ou augmenter ledit gain de façon à ainsi ajuster le niveau du signal analogique initial.

Selon encore un autre aspect, il est proposé un émetteur, comprenant un dispositif de transmission d'informations tel que défini ci-avant, et des moyens de prétraitement configurés pour recevoir lesdites informations et pour élaborer ledit signal numérique modulé par lesdites informations.

D'autres avantages et caractéristiques de l'invention apparaîtront à l'examen de la description détaillée de modes de mise en œuvre et de réalisation de l'invention, nullement limitatifs, et des dessins annexés sur lesquels :

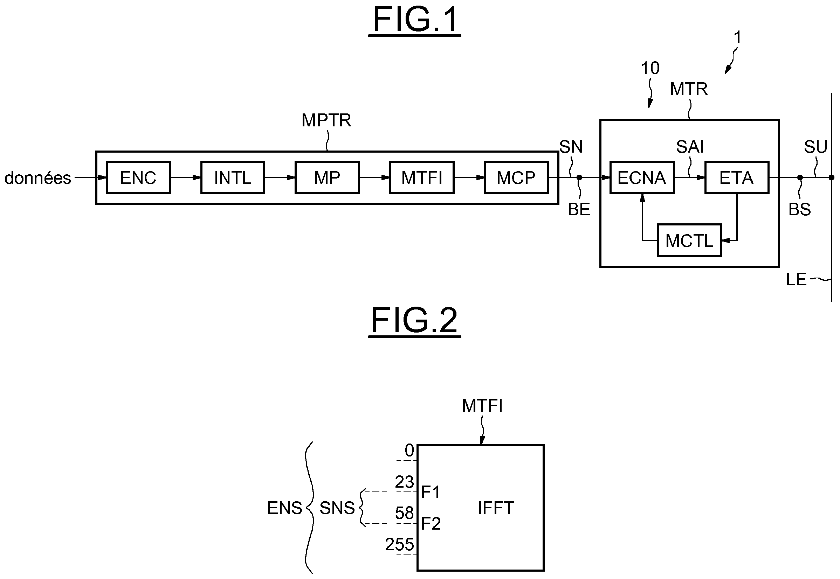

- les figures 1 à 9 illustrent schématiquement différents modes de mise en œuvre et de réalisation de l'invention.

Les modes de mise en œuvre et de réalisation qui vont maintenant être décrits le sont dans le cadre d'une transmission d'informations par courant porteur en ligne (CPL), bien que l'invention ne soit pas limitée à ce type d'application.

Dans tout ce qui suit, à chaque fois qu'on citera à titre d'exemples non limitatifs les normes PLC-G3 ou PRIME, on supposera que l'on considère la bande de fréquences CENELEC A (3-95 kHz).

On se réfère maintenant à la figure 1 pour illustrer schématiquement un exemple d'émetteur 1 capable de transmettre un signal analogique utile, ou signal analogique de canal, SU sur un canal de communication, ici une ligne électrique LE par courant porteur en ligne.

La chaîne de transmission de l'émetteur comprend des moyens de prétraitement MPTR recevant les données binaires, ou informations, à transmettre de moyens de codage de source par exemple et sont configurés pour générer un signal numérique SN, modulé par lesdites informations selon une modulation OFDM.

A titre d'exemple nullement limitatif les moyens de prétraitement MPTR tels qu'illustrés sur la figure 1 comportent ici un encodeur ENC, par exemple un encodeur convolutionnel. Des moyens d'entrelacement INTL sont connectés à la sortie de l'encodeur et sont suivis par des moyens de « mapage » (mapping means) qui transforment les bits en symboles selon un schéma de transformation dépendant du type de modulation utilisée, par exemple une modulation de type BPSK ou plus généralement une modulation QAM.

Chaque symbole contient des coefficients de modulation associés à des porteuses qui vont être modulées en conséquence. Les symboles sont délivrés en entrée de moyens MTFI destinés à effectuer une opération de transformée de Fourier inverse rapide (IFFT).

On notera ici en se référant plus particulièrement à la figure 2, que les porteuses modulées forment un sous-ensemble SNS de porteuses parmi un ensemble ENS disponible de porteuses (ensemble qui correspond à la taille de la transformée de Fourier inverse).

Ainsi, dans la norme PLC-G3, la taille de la transformée de Fourier inverse est égale à 256 tandis que les porteuses modulées du sous-ensemble SNS sont comprises entre les rangs 23 et 58, ce qui correspond à une bande fréquentielle F1-F2 comprise entre 35 et 91 KHz. La fréquence d'échantillonnage est ici égale à 400 KHz conduisant à un espacement entre les porteuses égal à 1,5625 KHz, ce qui rend ainsi les fréquences orthogonales (modulation OFDM).

Dans le standard PRIME, la taille de la transformée de Fourier inverse est égale à 512 alors que le nombre de porteuses du sous-ensemble SNS est égal à 97, ce qui fournit pour le signal utile une bande fréquentielle s'étendant entre 42 et 89 KHz.

Les coefficients de modulation associés aux porteuses non utilisées sont égaux à 0.

Le signal OFDM dans le domaine temporel est généré en sortie des moyens MTFI, et des moyens MCP rajoutent à chaque symbole OFDM dans le domaine temporel, un préfixe cyclique qui est une recopie en tête du symbole OFDM d'un certain nombre d'échantillons situés à la fin de ce symbole.

Si l'on se réfère de nouveau à la figure 1, on voit que le signal numérique SN, modulé par lesdites informations selon une modulation OFDM, et généré par les moyens de prétraitement MPTR est délivré à l'entrée BE d'un dispositif 10 de transmission des informations sur la ligne électrique LE.

Le dispositif 10 comprend à cet égard des moyens de traitement MTR connectés à la borne de sortie BS couplée à la ligne électrique LE.

Les moyens de traitement MTR vont générer le signal analogique de canal SU à partir du signal numérique SN.

Plus précisément le signal numérique modulé SN est converti dans un étage de conversion numérique/analogique ECNA, en un signal analogique, appelé ici signal analogique initial, SAI qui est par conséquent également modulé.

Le signal analogique initial SAI est ensuite traité dans un étage ETA, communément désigné par l'homme du métier sous le vocable « Analog Front End », où il subit notamment une amplification de puissance, avant d'être transmis sous la forme du signal analogique de canal modulé SU, sur la ligne électrique LE.

Outre les moyens qui viennent d'être décrits, les moyens de traitement MTR comportent en outre un module de contrôle MCTL configuré pour effectuer
au moins une détermination au cours de ladite transmission des informations, d'un taux d'écrêtage du signal amplifié au sein de l'étage ETA, sur au moins un intervalle temporel, par exemple une trame de transmission, et
un ajustement du niveau du signal analogique initial SAI en fonction du taux d'écrêtage déterminé.

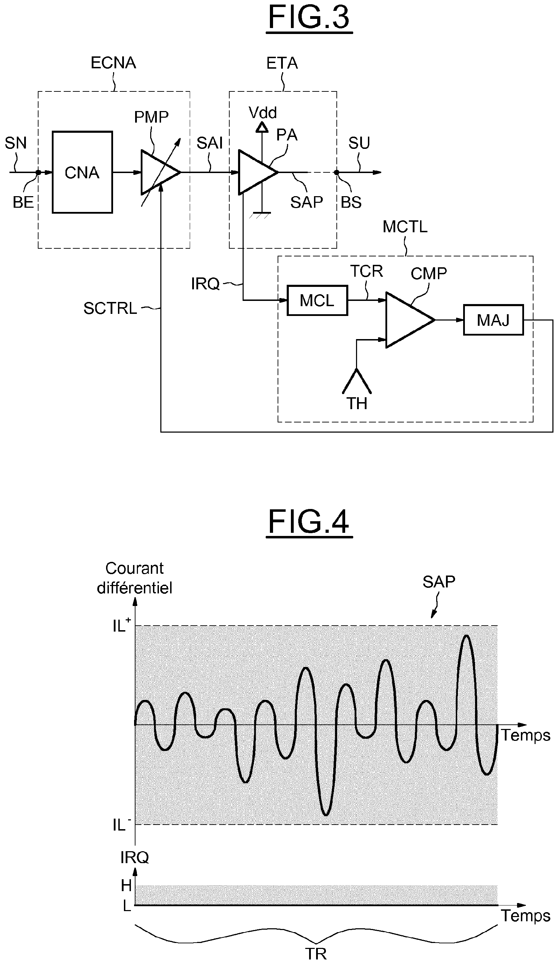

Plus précisément, comme illustré plus en détail sur la figure 3, l'étage de conversion numérique/analogique ECNA comporte un convertisseur numérique/analogique proprement dit CNA suivi ici d'un amplificateur à gain variable PMP.

L'étage ETA comporte quant à lui notamment un amplificateur de puissance PA recevant le signal analogique initial SAI et délivrant un signal analogique amplifié SAP.

Lorsque l'amplificateur de puissance PA entre en saturation, du fait de la chute de l'impédance (vue de l'émetteur) de la ligne électrique LE en deçà d'une valeur limite, par exemple 2 ohms, le signal amplifié est écrêté et un signal logique IRQ est émis. Ce signal logique IRQ reste par exemple à l'état haut tant que l'amplificateur de puissance est en saturation et redescend ensuite à l'état bas lorsque l'état de saturation est terminé. Ainsi, une impulsion du signal IRQ est représentative d'un pic écrêté du signal amplifié SAP.

Le module de contrôle MCTL comporte par exemple un moyen de calcul MCL configuré pour déterminer le taux d'écrêtage du signal sur un intervalle temporel donné, par exemple une trame de transmission d'informations, à partir par exemple du nombre d'impulsions du signal IRQ sur ledit intervalle temporel.

Le module de contrôle MCTL comporte par ailleurs un comparateur CMP configuré pour comparer le taux d'écrêtage TCR ainsi calculé avec un seuil TH. En fonction du résultat de cette comparaison, un moyen d'ajustement MAJ délivre un signal de contrôle SCTRL de façon à ajuster le niveau du signal analogique initial SAI, c'est-à-dire le signal en entrée de l'amplificateur de puissance PA.

Typiquement, ce niveau est abaissé lorsque le taux d'écrêtage TCR est supérieur au seuil TH.

Le moyen de calcul et/ou le moyen d'ajustement peuvent être réalisés par exemple par des circuits logiques et/ou de façon logicielle au sein d'un microcontrôleur.

Dans l'exemple décrit ici, le signal SCTRL agit sur l'amplificateur PMP à gain variable pour modifier son gain, par exemple en décrémentant ou en incrémentant le gain d'une valeur ΔG exprimée en dB.

En variante il serait également possible d'effectuer l'ajustement de signal en agissant par exemple sur le niveau du signal numérique SN délivré au convertisseur numérique/analogique CNA.

La figure 4 illustre, en partie haute, un exemple de signal analogique modulé amplifié SAP délivré en sortie de l'amplificateur de puissance PA, et plus particulièrement dans le cas présent, l'évolution du courant différentiel délivré par cet amplificateur de puissance au cours d'une trame de transmission.

On voit que ce signal comporte des pics mais qu'aucun de ces pics de courant ne dépasse les valeurs limites IL⁺ et IL⁻ au delà desquelles l'amplificateur va entrer en saturation.

Par conséquent, le signal IRQ, représenté en partie basse de la figure 4, reste constamment à son état bas L.

Dans ce cas, le taux d'écrêtage du signal SAP est nul et il n'y a pas de distorsion du signal émis sur la ligne électrique.

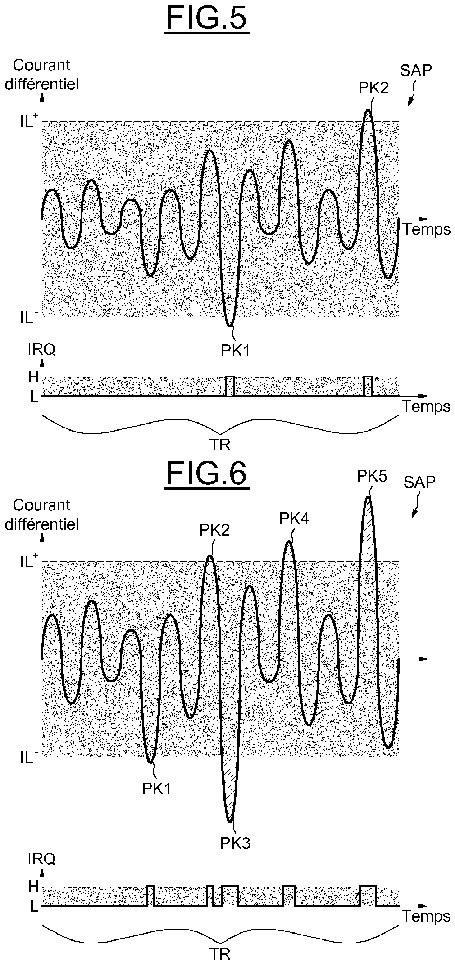

Sur la figure 5, on a représenté schématiquement une configuration dans laquelle le signal amplifié SAP comporte seulement quelques pics écrêtés, c'est-à-dire présentant un taux d'écrêtage acceptable conduisant à un niveau de distorsion acceptable.

Dans cet exemple, seuls deux pics PK1 et PK2 sont écrêtés, ce qui se traduit par deux impulsions du signal IRQ au cours de la trame de transmission TR.

Le taux d'écrêtage est alors par exemple calculé en comptant le nombre d'impulsions du signal IRQ et en divisant ce nombre d'impulsions par la longueur de la trame. Ce taux d'écrêtage peut être ensuite converti en un pourcentage du nombre de pics total du signal SAP pendant la trame de transmission TR.

Typiquement, pour une application PLC, un taux d'écrêtage TCR inférieur ou égal à un seuil de 0,1% est un taux acceptable, c'est-à-dire conduisant à une distorsion acceptable du signal.

Sur la figure 6, on a représenté au contraire un cas de signal SAP présentant un taux d'écrêtage supérieur au seuil.

Ainsi, à titre d'exemple, le signal SAP comporte ici cinq pics écrêtés, ce qui conduit à cinq impulsions du signal IRQ au cours de la trame.

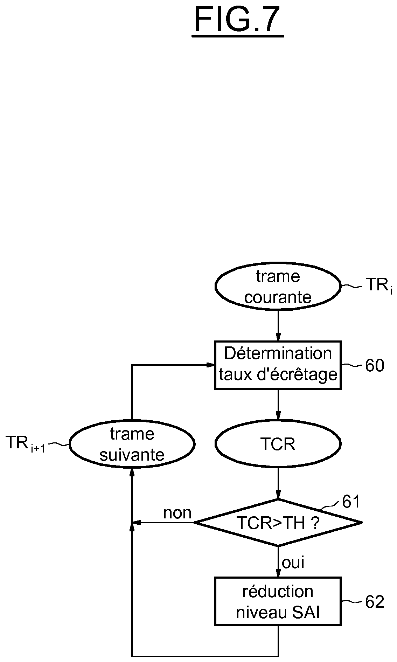

On se réfère maintenant plus particulièrement aux figures 7 à 9 pour illustrer des exemples de mise en œuvre du procédé selon l'invention.

Sur la figure 7, on suppose que les informations sont transmises au cours de trames successives, non nécessairement régulièrement espacées temporellement.

Au cours de la trame courante TRᵢ on détermine (étape 60) le taux d'écrêtage TCR.

On compare ensuite ce taux d'écrêtage TCR au seuil TH (étape 61).

Si le taux d'écrêtage TCR n'est pas supérieur au seul TH, alors, en général, on passe à la trame suivante sans diminuer le niveau du signal analogique initial. Toutefois, comme on le verra plus en détail ci-après, il est possible dans certains cas, qu'en présence d'un taux d'écrêtage TCR inférieur au seuil TH, on incrémente le niveau du signal analogique SAI pour la trame suivante sans toutefois dépasser un niveau nominal.

Si par contre le taux d'écrêtage TCR est supérieur au seuil TH, alors, on réduit le niveau du signal SAI (étape 62), typiquement en abaissant le gain G de l'amplificateur PMP, ce gain réduit étant appliqué pour la trame suivante TRᵢ₊₁.

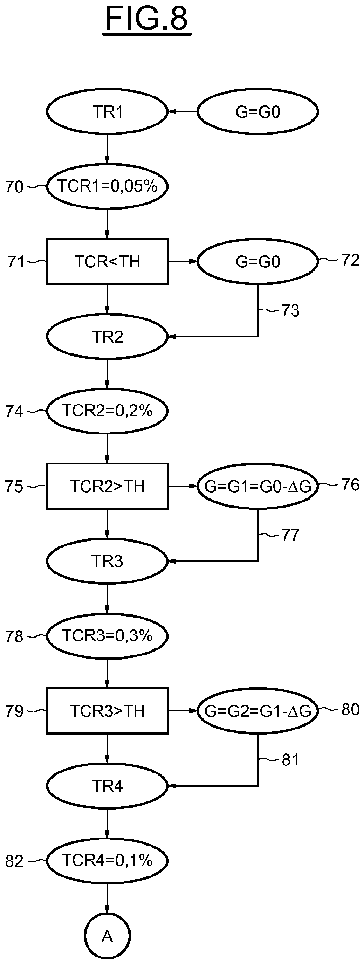

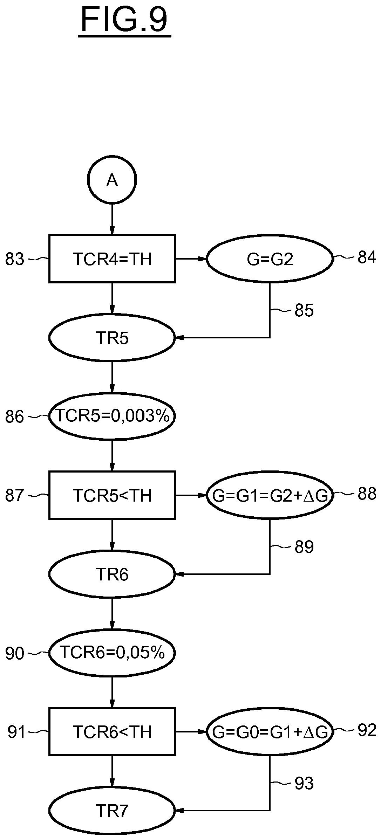

On se réfère maintenant plus particulièrement aux figures 8 et 9 pour illustrer un exemple d'ajustement du niveau du signal analogique SAI.

On suppose que le gain G de l'amplificateur PMP a une valeur nominale G0 correspondant à une absence d'écrêtage ou à un taux d'écrêtage inférieur au seuil, qui est choisi ici égal à 0,1% du nombre total de pics pendant une durée de trame TR.

On suppose que le gain G0 est appliqué pendant la première trame TR1.

Au cours de cette première trame, le taux d'écrêtage TCR1 est déterminé (étape 70) et est supposé égal à 0,05%.

Comme ce taux d'écrêtage TCR1 est inférieur au seuil TH (étape 71) le moyen d'ajustement MAJ ne modifie pas la valeur du gain G et le maintient à sa valeur nominale G0 (étape 72).

Cette valeur nominale G0 va être appliquée lors de la trame suivante TR2.

Au cours de cette trame suivante TR2, le taux d'écrêtage TCR2 est de nouveau déterminé (étape 74) et il est supposé égal à 0,2%.

Puisque ce taux d'écrêtage TCR2 est supérieur au seuil TH (étape 75) une nouvelle valeur de gain G est calculée, à savoir une valeur G1 égale à G0-ΔG, où ΔG est l'incrément de gain qui va être retiré à la valeur nominale G0 (étape 76).

Ce nouveau gain G1 va être appliqué pendant la troisième trame TR3.

Au cours de cette troisième trame TR3, le taux d'écrêtage TCR3 est calculé (étape 78) et il est supposé égal à 0,3%.

Comme ce taux TCR3 est encore supérieur au seuil TH (étape 79) une nouvelle valeur de gain G2 va être déterminée en retirant de nouveau l'incrément de gain ΔG au gain précédent G1 (étape 80).

Ce nouveau gain G2 sera appliqué pendant la trame suivante TR4.

Au cours de cette trame suivante TR4, le nouveau taux d'écrêtage TCR4 est déterminé (étape 82) et cette fois-ci il est égal à 0,1%.

Comme ce taux d'écrêtage TCR4 correspond au seuil TH (étape 83) le moyen d'ajustement MAJ ne modifie pas la valeur du gain G et le laisse égal à la valeur G2 (étape 84).

Ce gain G2 sera alors appliqué au cours de la trame suivante TR5 (étape 85).

Au cours de la trame TR5, le taux d'écrêtage TCR5 est de nouveau déterminé (étape 86) et il est cette fois-ci égal à 0,003%.

Comme le taux d'écrêtage TCR5 est inférieur au seuil TH (étape 87) et que la valeur du gain est inférieure à sa valeur nominale G0, un nouveau gain G est déterminé dans l'étape 88 de façon à pouvoir être appliqué pour la trame suivante TR6.

Ce nouveau gain est obtenu en incrémentant le gain précédent G2 de l'incrément de gain ΔG, ce qui fournit alors de nouveau la valeur G1 pour le gain G.

Cette valeur G1 est appliquée pour la trame suivante TR6 (étape 89).

Au cours de cette trame suivante TR6, le taux d'écrêtage TCR6 est calculé et il est égal à 0,05% (étape 90).

Là encore, comme ce taux d'écrêtage TCR6 est inférieur au seuil TH (étape 91) et que la valeur du gain G1 est là encore inférieure à la valeur nominale G0, le moyen d'ajustement MAJ va alors conférer au gain G sa valeur nominale G0 en incrémentant le gain G1 de l'incrément de gain ΔG (étape 92).

Le gain nominal G0 va alors être appliqué à la trame suivante TR7 (étape 93).

Le procédé se poursuit ensuite pour les trames suivantes.

Dans ce qui précède on a supposé que l'incrément de gain ΔG était constant. Cela étant cet incrément ΔG peut être calculé en fonction de la différence entre le taux d'écrêtage mesuré et le seuil TH, pour accélérer le temps de réponse à un changement d'impédance important. Dans ce cas, ΔG peut varier d'une trame à une autre.

## Revendications

1. Procédé de transmission d'informations par courant porteur en ligne sur un canal de communication, comprenant une conversion numérique/analogique d'un signal numérique modulé par lesdites informations de façon à obtenir un signal analogique initial modulé (SAI) ayant un facteur de crête supérieur à un, une amplification du signal analogique initial de façon à obtenir un signal modulé amplifié (SAP) et une transmission sur ledit canal de communication d'un signal analogique de canal modulé (SU) issu du signal analogique amplifié modulé, dans lequel, l'impédance du canal de communication étant susceptible de varier au cours de ladite transmission et le signal amplifié étant écrêté lorsque ladite impédance est inférieure à une valeur limite, le procédé comprend en outre au moins une détermination (60) au cours de ladite transmission d'un taux d'écrêtage (TCR) du signal amplifié sur au moins un intervalle temporel et un ajustement (61, 62) du niveau du signal analogique initial en fonction dudit taux d'écrêtage déterminé, dans lequel l'ajustement du niveau du signal analogique initial comprend une comparaison (61) du taux d'écrêtage déterminé (TCR) avec un seuil (TH) et un abaissement (62) du niveau du signal analogique initial si le taux d'écrêtage est supérieur au seuil, ledit procédé comprenant plusieurs déterminations successives du taux d'écrêtage au cours d'intervalles temporels successifs (TRᵢ), et une détermination lors d'un intervalle temporel courant (TRᵢ), de l'ajustement du niveau du signal analogique initial à appliquer sur le signal analogique initial au cours de l'intervalle temporel suivant (TRᵢ₊₁).

2. Procédé selon la revendication 1, dans lequel au début de ladite transmission le signal analogique initial a un niveau nominal, et si lors d'un intervalle temporel courant pour lequel le niveau du signal analogique initial est inférieur au niveau nominal, le taux d'écrêtage déterminé est inférieur audit seuil (TH), l'ajustement du niveau du signal analogique initial à appliquer au cours de l'intervalle temporel suivant comprend une augmentation du niveau du signal analogique initial sans toutefois dépasser le niveau nominal.

3. Procédé selon l'une des revendications 1 ou 2, dans lequel les informations sont transmises par trame et chaque intervalle temporel est la durée d'une trame (TRᵢ).

4. Procédé selon l'une des revendications précédentes, dans lequel les signaux modulés sont modulés selon une modulation OFDM.

5. Procédé selon l'une des revendications précédentes, dans lequel le canal de transmission (LE) est une ligne électrique et le signal analogique de canal est un signal véhiculé par courant porteur en ligne.

6. Dispositif de transmission d'informations par courant porteur en ligne, comprenant une entrée (BE) pour recevoir un signal numérique (SN) modulé par lesdites informations, une sortie (BS) destinée à être couplée sur un canal de communication (LE) pour délivrer un signal analogique de canal modulé (SU) et des moyens de traitement (MTR) connectés entre l'entrée et la sortie, configurés pour élaborer le signal analogique de canal modulé (SU) à partir du dudit signal numérique modulé (SN), et comportant un étage de conversion numérique/analogique (ECNA) configuré pour effectuer une conversion numérique/analogique du signal numérique modulé et délivrer un signal analogique initial modulé (SAI) ayant un facteur de crête supérieur à un et un étage amplificateur (PA) configuré pour effectuer une amplification du signal analogique initial et délivrer un signal modulé amplifié (SAP), dans lequel l'impédance du canal de communication étant susceptible de varier au cours de ladite transmission et l'étage amplificateur étant configuré pour écrêter le signal amplifié lorsque ladite impédance est inférieure à une valeur limite, les moyens de traitement (MTR) comprennent en outre un module de contrôle (MCTL) configuré pour effectuer au moins une détermination au cours de ladite transmission d'un taux d'écrêtage (TCR) du signal amplifié sur au moins un intervalle temporel et un ajustement du niveau du signal analogique initial en fonction dudit taux d'écrêtage déterminé, **caractérisé en ce que** le module de contrôle (MCTL) comprend un comparateur (CMP) configuré pour effectuer une comparaison du taux d'écrêtage déterminé avec un seuil (TH) et un moyen d'ajustement (MAJ) configuré pour abaisser le niveau du signal analogique initial si le taux d'écrêtage est supérieur au seuil, et le module de contrôle (MCTL) est configuré en outre pour effectuer plusieurs déterminations successives du taux d'écrêtage au cours d'intervalles temporels successifs, et pour effectuer lors d'un intervalle temporel courant, une détermination de l'ajustement du niveau du signal analogique initial à appliquer sur le signal analogique initial au cours de l'intervalle temporel suivant.

7. Dispositif selon la revendication 6, dans lequel au début de ladite transmission le signal analogique initial a un niveau nominal, et si lors d'un intervalle temporel courant pour lequel le niveau du signal analogique initial est inférieur au niveau nominal, le taux d'écrêtage déterminé est inférieur audit seuil, le moyen d'ajustement (MAJ) est configuré pour, au cours de l'intervalle temporel suivant, augmenter le niveau du signal analogique initial sans toutefois dépasser le niveau nominal.

8. Dispositif selon l'une des revendications 6 ou 7, dans lequel l'étage de conversion numérique/analogique (ECNA) est un étage à gain variable et le moyen d'ajustement (MAJ) est configuré pour réduire ou augmenter ledit gain (G) de façon à ainsi ajuster le niveau du signal analogique initial.

9. Dispositif selon l'une des revendications 6 à 8, dans lequel les informations sont transmises par trame et chaque intervalle temporel est la durée d'une trame (TRᵢ).

10. Dispositif selon l'une des revendications 6 à 9, dans lequel ladite modulation est une modulation OFDM.

11. Dispositif selon l'une des revendications 6 à 10, dans lequel le canal de transmission (LE) est une ligne électrique et le signal de canal est un signal véhiculé par courant porteur en ligne.

12. Emetteur, comprenant un dispositif de transmission d'informations (10) selon l'une des revendications 6 à 11, et des moyens de prétraitement (MPTR) configurés pour recevoir lesdites informations et pour élaborer ledit signal numérique (SN) modulé par lesdites informations.

## Patentansprüche

1. Verfahren zur Übertragung von Informationen durch Trägerstrom über einen Kommunikationskanal, umfassend eine Digital-Analog-Umwandlung eines von den Informationen modulierten digitalen Signals, um ein moduliertes analoges Ausgangssignal (SAI) mit einem Scheitelfaktor größer als eins zu erhalten, eine Verstärkung des analogen Ausgangssignals, um ein verstärktes moduliertes Signal (SAP) zu erhalten und eine Übertragung eines modulierten analogen Kanalsignals (SU) auf dem Kommunikationskanal, das aus dem modulierten verstärkten analogen Signal hervorgegangen ist, wobei die Impedanz des Kommunikationskanals imstande ist, während der Übertragung zu schwanken und das verstärkte Signal abgeschnitten wird, wenn die Impedanz kleiner als ein Grenzwert ist, wobei das Verfahren ferner während der Übertragung mindestens eine Bestimmung (60) eines Beschneidungsgrads (TCR) des verstärkten Signals über mindestens ein Zeitintervall und eine Anpassung (61, 62) des Niveaus des analogen Ausgangssignals in Abhängigkeit von dem bestimmten Beschneidungsgrad umfasst, wobei die Anpassung des Niveaus des analogen Ausgangssignals einen Vergleich (61) des bestimmten Beschneidungsgrads (TCR) mit einem Grenzwert (TH) und eine Absenkung (62) des Niveaus des analogen Ausgangssignals umfasst, wenn der Beschneidungsgrad größer als der Grenzwert ist, wobei das Verfahren mehrere aufeinanderfolgende Bestimmungen des Beschneidungsgrads während aufeinanderfolgender Zeitintervalle (TRᵢ) umfasst und während eines laufenden Zeitintervalls (TRᵢ) eine Bestimmung der Anpassung des Niveaus des analogen Ausgangssignals, die auf das analoge Ausgangssignal während des folgenden Zeitintervalls (TRᵢ₊₁) anzuwenden ist.

2. Verfahren nach Anspruch 1, wobei das analoge Ausgangssignal zu Beginn der Übertragung ein nominales Niveau hat, und wenn während eines laufenden Zeitintervalls, für das das Niveau des analogen Ausgangssignals unter dem nominalen Niveau liegt, der bestimmte Beschneidungsgrad unter dem Grenzwert (TH) liegt, die während des nächsten Zeitintervalls anzuwendende Anpassung des Niveaus des analogen Ausgangssignals eine Erhöhung des Niveaus des analogen Ausgangssignals umfasst, ohne jedoch das nominale Niveau zu überschreiten.

3. Verfahren nach einem der Ansprüche 1 oder 2, wobei die Informationen rasterweise übertragen werden und jedes Zeitintervall die Dauer eines Rasters (TRᵢ) ist.

4. Verfahren nach einem der vorangehenden Ansprüche, wobei die modulierten Signale gemäß einer OFDM-Modulation moduliert werden.

5. Verfahren nach einem der vorangehenden Ansprüche, wobei der Übertragungskanal (LE) eine elektrische Leitung ist und das analoge Kanalsignal ein durch Trägerstrom transportiertes Signal ist.

6. Vorrichtung zur Übertragung von Informationen durch Trägerstrom, umfassend einen Eingang (BE) zum Empfangen eines von den Informationen modulierten digitalen Signals (SN), einen Ausgang (BS), der bestimmt ist, auf einem Kommunikationskanal (LE) gekoppelt zu sein, um ein moduliertes analoges Kanalsignal (SU) bereitzustellen und Verarbeitungsmittel (MTR), die zwischen dem Eingang und dem Ausgang verbunden sind, die ausgelegt sind, um das modulierte analoge Kanalsignal (SU) ausgehend von dem modulierten digitalen Signal (SN) zu entwickeln, und eine Digital-Analog-Umwandlungsstufe (ECNA) aufweist, die ausgelegt ist, um eine Digital-Analog-Umwandlung des modulierten digitalen Signals durchzuführen und ein moduliertes analoges Ausgangssignal (SAI) mit einem Scheitelfaktor größer als eins bereitzustellen und eine Verstärkungsstufe (PA), die ausgelegt ist, um eine Verstärkung des analogen Ausgangssignals durchzuführen und ein verstärktes moduliertes Signal (SAP) bereitzustellen, wobei die Impedanz des Kommunikationskanals imstande ist, während der Übertragung zu schwanken und die Verstärkerstufe ausgelegt ist, um das verstärkte Signal abzuschneiden, wenn die Impedanz kleiner als ein Grenzwert ist, wobei die Verarbeitungsmittel (MTR) ferner ein Steuermodul (MCTL) umfassen, das ausgelegt ist, um während der Übertragung mindestens eine Bestimmung eines Beschneidungsgrads (TCR) des verstärkten Signals über mindestens ein Zeitintervall und eine Anpassung des Niveaus des analogen Ausgangssignals in Abhängigkeit von dem bestimmten Beschneidungsgrad durchzuführen, **dadurch gekennzeichnet, dass** das Steuermodul (MCTL) einen Komparator (CMP) umfasst, der ausgelegt ist, um einen Vergleich des bestimmten Beschneidungsgrads mit einem Grenzwert (TH) durchzuführen und ein Anpassungsmittel (MAJ), das ausgelegt ist, um das Niveau des analogen Ausgangssignals abzusenken, wenn der Beschneidungsgrad größer als der Grenzwert ist, und das Steuermodul (MCTL) ferner ausgelegt ist, um mehrere aufeinanderfolgende Bestimmungen des Beschneidungsgrads während aufeinanderfolgender Zeitintervalle durchzuführen und um während eines laufenden Zeitintervalls eine Bestimmung der Anpassung des Niveaus des analogen Ausgangssignals durchzuführen, die auf das analoge Ausgangssignal während des folgenden Zeitintervalls anzuwenden ist.

7. Vorrichtung nach Anspruch 6, wobei das analoge Ausgangssignal zu Beginn der Übertragung ein nominales Niveau hat, und wenn während eines laufenden Zeitintervalls, für das das Niveau des analogen Ausgangssignals unter dem nominalen Niveau liegt, der bestimmte Beschneidungsgrad unter dem Grenzwert liegt, das Anpassungsmittel (MAJ) ausgelegt ist, um während des nächsten Zeitintervalls das Niveau des analogen Ausgangssignals zu erhöhen, ohne jedoch das nominale Niveau zu überschreiten.

8. Vorrichtung nach einem der Ansprüche 6 oder 7, wobei die Digital-Analog-Umwandlungsstufe (ECNA) eine Stufe mit variablem Gain ist und das Anpassungsmittel (MAJ) ausgelegt ist, um den Gain (G) derart zu reduzieren oder zu erhöhen, so dass das Niveau des analogen Ausgangssignals angepasst wird.

9. Vorrichtung nach einem der Ansprüche 6 bis 8, wobei die Informationen rasterweise übertragen werden und jedes Zeitintervall die Dauer eines Rasters (TRᵢ) ist.

10. Vorrichtung nach einem der Ansprüche 6 bis 9, wobei die Modulation eine OFDM-Modulation ist.

11. Vorrichtung nach einem der Ansprüche 6 bis 10, wobei der Übertragungskanal (LE) eine elektrische Leitung und das Kanalsignal ein durch Trägerstrom transportiertes Signal ist.

12. Sender, umfassend eine Vorrichtung zur Übertragung von Informationen (10) nach einem der Ansprüche 6 bis 11 und Vorverarbeitungsmittel (MPTR), die ausgelegt sind, um die Informationen zu empfangen und um das von den Informationen modulierte digitale Signal (SN) zu entwickeln.

## Claims

1. Method for transmitting information by powerline carrier on a communication channel, comprising a digital to analogue conversion of a digital signal modulated by said information so as to obtain a modulated initial analogue signal (SAI) having a peak factor greater than one, an amplification of the initial analogue signal so as to obtain an amplified modulated signal (SAP) and a transmission on said communication channel of a modulated channel analogue signal (SU) resulting from the modulated amplified analogue signal, wherein, the impedance of the communication channel being liable to vary during said transmission and the amplified signal being clipped when said impedance is below a limit value, the method furthermore comprises at least one determination (60) during said transmission of a clipping rate (TCR) of the amplified signal over at least one time interval and an adjustment (61, 62) of the level of the initial analogue signal according to said determined clipping rate, wherein the adjustment of the level of the initial analogue signal comprises a comparison (61) of the determined clipping rate (TCR) with a threshold (TH) and a reduction (62) of the level of the initial analogue signal if the clipping rate is above the threshold, said method comprising several successive determinations of the clipping rate during successive time intervals (TRᵢ), and a determination, during a current time interval (TRᵢ), of the adjustment of the level of the initial analogue signal to be applied to the initial analogue signal during the following time interval (TRᵢ₊₁).

2. Method according to claim 1, wherein, at the start of said transmission, the initial analogue signal has a nominal level and, if during a current time interval for which the level of the initial analogue signal is below the nominal level, the clipping rate determined is below said threshold (TH), the adjustment of the level of the initial analogue signal to be applied during the following time interval comprises an increase of the level of the initial analogue signal without however exceeding the nominal level.

3. Method according to one of claims 1 or 2, wherein the information is transmitted by frame and each time interval is the duration of a frame (TRᵢ).

4. Method according to one of the preceding claims, wherein the modulated signals are modulated in accordance with an OFDM modulation.

5. Method according to one of the preceding claims, wherein the transmission channel (LE) is an electrical line and the channel analogue signal is a signal conveyed by powerline carrier.

6. Device for transmitting information by powerline carrier, comprising an input (BE) for receiving a digital signal (SN) modulated by said information, an output (BS) intended to be coupled to a communication channel (LE) to deliver a modulated channel analogue signal (SU) and processing means (MTR) connected between the input and the output, configured to produce the modulated channel analogue signal (SU) from said modulated digital signal (SN), and including a digital to analogue conversion stage (ECNA) configured for implementing a digital to analogue conversion of the modulated digital signal and for delivering a modulated initial analogue signal (SAI) having a peak factor greater than one and an amplifier stage (PA) configured for implementing an amplification of the initial analogue signal and for delivering an amplified modulated signal (SAP), wherein, the impedance of the communication channel being liable to vary during said transmission and the amplified stage being configured for clipping the amplifier signal when said impedance is below a limit value, the processing means (MTR) furthermore comprise a control module (MCTL) configured for making at least one determination during said transmission of a clipping rate (TCR) of the amplified signal over at least one time interval and an adjustment of the level of the initial analogue signal according to said clipping rate determined, **characterised in that** the control module (MCTL) comprises a comparator (CMP) configured for making a comparison of the clipping rate determined with a threshold (TH) and an adjustment means (MAJ) configured for lowering the level of the initial analogue signal if the clipping rate is above the threshold, and the control module (MCTL) is furthermore configured for making several successive determinations of the clipping rate during successive time intervals, and for, during a current time interval, making a determination of the adjustment of the level of the initial analogue signal to be applied to the initial analogue signal during the following time interval.

7. Device according to claim 6, wherein, at the start of said transmission, the initial analogue signal has a nominal level and, if during a current time interval for which the level of the initial analogue signal is below the nominal level, the clipping rate determined is below said threshold, the adjustment means (MAJ) is configured for, during the following time interval, increasing the level of the initial analogue signal without however exceeding the nominal level.

8. Device according to one of claims 6 or 7, wherein the digital to analogue conversion stage (ECNA) is a variable-gain stage and the adjustment means (MAJ) is configured for reducing or increasing said gain (G) so as thus to adjust the level of the initial analogue signal.

9. Device according to one of claims 6 to 8, wherein the information is transmitted by frame and each time interval is the duration of a frame (TRᵢ).

10. Device according to one of claims 6 to 9, wherein said modulation is an OFDM modulation.

11. Device according to one of claims 6 to 10, wherein the transmission channel (LE) is an electrical line and the channel signal is a signal conveyed by powerline carrier.

12. Transmitter, comprising a device for transmitting information (10) according to one of claims 6 to 11, and preprocessing means (MPTR) configured for receiving said information and for producing said digital signal (SN) modulated by said information.
